# EUROPÄISCHE PATENTSCHRIFT

(11) **EP 0 972 658 B1**
(45) Veröffentlichungstag und Bekanntmachung des Hinweises auf die Patenterteilung: **10.12.2003**
(21) Anmeldenummer: 99113015.4
(22) Anmeldetag: 06.07.1999
(51) Int. Cl.: B60C 11/24, B60C 19/00

(54) **Verfahren zur Bestimmung der Profiltiefe bei einem Fahrzeugreifen**
Method of determining the tread depth in a vehicle tyre
Procédé de détermination de la profondeur du profil d'un pneu de véhicule

(30) Priorität: 15.07.1998 DE 19831732
(43) Veröffentlichungstag der Anmeldung: 19.01.2000
(73) Patentinhaber: Bayerische Motoren Werke Aktiengesellschaft, 80788 München (DE)
(72) Erfinder: Flechtner, Horst, 85748 Garching (DE); Bachmann, Thomas, 81925 München (DE)
(74) Vertreter: Wesel-Mair, Julia (DE)

(56) Entgegenhaltungen:
- EP-A- 0 890 458
- DE-A- 3 236 520
- DE-A- 19 514 219
- DE-A- 19 523 917
- DE-C- 19 716 586
- GB-A- 2 226 434

## Beschreibung

Die Erfindung betrifft ein Verfahren zur Bestimmung der Profiltiefe bei einem Fahrzeugreifen während der Fahrt.

Für verschiedene Anwendungen im Automobilbereich, beispielsweise für den Einsatz von ABS oder anderen Schlupfregelsystemen, ist die Kenntnis des Verschleißzustandes der an einem Fahrzeug montierten Reifen bzw. deren Profiltiefe von Vorteil.

Bekannte Vorrichtungen verwendet eine Sensorik im Profil, deren Haltbarkeit jedoch nicht gesichert ist. Alternative Ideen, wie die Auswertung der Radvertikalschwingungen und der Rückschluß auf die Masse eines Reifens haben sich ebenfalls als unpraktikabel erwiesen, da die Masse des abgefahrenen Profils im Vergleich zu den ungefederten Massen sehr gering ist und sich daher eine große Ungenauigkeit bei der Bestimmung der Profiltiefe ergibt.

Andere Methoden einer berührungslosen Erfassung der Profiltiefe der an einem Fahrzeug montierten Reifen verwenden beispielsweise eine Lasertriangulationsmeßtechnik, die jedoch mit einem zusätzlich konstruktiven Aufwand verbunden ist. Auch ist eine solche Meßtechnik nur für Forschungszwecke einsetzbar.

Die europäische Patentanmeldung EP 890 458-A, die am 13. Januar 1999 veröffentlicht wurde und als Stand der Technik gemäß Artikel 54(3) EPÜ gilt, beschreibt eine Vorrichtung zur Ermittlung der Abnutzung von Fahrzeugreifen, wobei die Drehgeschwindigkeiten der Vorderräder mit denen der Hinterräder während eines Beschleunigungsvorganges verglichen werden und über eine geeignete Formel der ermittelte Reifenformschlupf mit dem bei vergleichbaren Fahrbedingungen für neue Reifen bekannten Reifenformschlupf verglichen wird. Berücksichtigt wird dabei auch, ob es sich bei den Reifen um Sommerreifen oder Winterreifen handelt. Überschreitet die Abnutzung der Reifen ein vorgegebenes Maß, so wird bei diesem Stand der Technik ein Warnsignal ausgegeben.

Wie weiter oben bereits angegeben wurde, ist es beispielsweise für den Einsatz von ABS oder anderen Schlupfregelsystemen wünschenswert, den Verschleißzustand der an einem Fahrzeug montierten Reifen bzw. deren Profiltiefe möglichst genau zu kennen, und nicht nur ein Warnsignal zu erhalten, wenn die Abnutzung der Reifen ein vorgegebenes Maß überschreitet.
Wird nämlich die Profiltiefe der Reifen an einem Fahrzeug nicht erfaßt, muß man sicherheitshalber von einem relativ schlechten Reifen ausgehen. Schlupfregelsysteme können sich dann erst adaptiv während einer Regelung auf den Reifen einstellen. Dadurch kann das mögliche Kraftschlußpotential nicht immer optimal genutzt werden. Auch eine Aquaplaning-Warnung muß immer die vorhandene Profiltiefe der auf dem Fahrzeug montierten Reifen berücksichtigen.

Aufgabe der vorliegenden Erfindung ist die Bereitstellung eines Verfahrens, mit dem ohne zusätzliche Hardware eine kostengünstige und sichere Methode zur Bestimmung der Profiltiefe der Reifen eines Fahrzeugs während der Fahrt möglich ist.

Diese Aufgabe wird durch die im Anspruch 1 angegebenen Merkmale gelöst.

Kerngedanke der Erfindung ist die Verwendung von Schlupfdaten zur Profiltiefenbestimmung unter Nutzung bekannter Reifenparameter.

Dabei nützt man die Tatsache aus, daß sich ein unter Last abrollender Reifen insbesondere im Stollenbereich verformt und der sich durch diese Verformung ergebende Schlupf unmittelbar von der Dicke der Stollen und damit von der Profiltiefe abhängt. Ursache des Schlupfes ist also die reversible Verformung der Profilelemente. Dabei handelt es sich um den Verformungsschlupf der Profilelemente. Ein Gleitschlupf, wie er an der Kraftschlußgrenze auftritt, darf nicht berücksichtigt werden.

Aus einer Kombination der Schlupfdaten mit den spezifischen Daten der auf dem Fahrzeug montierten Reifen sowie der Fahrdynamik- und evtl. Umweltdaten kann aus einem Kennfeld die Profiltiefe gewonnen werden. Dabei sollte für jeden für das jeweilige Fahrzeug zugelassenen Reifen ein entsprechendes Kennfeld, welches mehrdimensional sein kann, im Fahrzeug hinterlegt sein. Abhängig von den erfaßten Daten können dann die Zusammenhänge zwischen Reifenschlupf und Profil abgerufen werden. Die verschiedenen, jedem Reifen zugeordneten Kennfelder kann man experimentell bestimmen. Alternativ kann man die Profilsteifigkeit auch in Abhängigkeit der Profiltiefe bestimmen.

Es ist bereits hilfreich, wenn durch die Auswertung des Schlupfes ein relativ grober Rückschluß auf den Reifenverschleiß möglich ist. Dabei können Abstufungen im Bereich von 0, 20, 40, 60, 80 und 100 % Profiltiefe angegeben werden.

In Situationen mit relativ hoher Kraftübertragung am Rad, beispielsweise bei hoher Geschwindigkeit oder bei starker Längsbeschleunigung, treten auch ohne Erreichen der Kraftschlußgrenzen relativ hohe (Form-)Schlupfwerte auf. Beispielsweise liegt die Drehzahldifferenz der vorderen und der hinteren, angetriebenen Räder, bei Geschwindigkeiten deutlich über 100 km/h und bei einer Geradeausfahrt mit neuwertigen Winterreifen bei Werten um 1 %. Bei abgefahrenen Sommerreifen liegt dagegen ein Schlupf von weniger als 0,2 % vor. Bei Beschleunigungen treten, je nach Randbedingungen, auch höhere Werte auf.

Obwohl der Formschlupf bei einem Reifen von einer Vielzahl von Parametern beeinflußt wird, ist es durch eine einer Langzeitbeobachtung entsprechende Mittelung möglich, die Profiltiefe abzuschätzen. Dazu müssen natürlich möglichst viele relevante Informationen zur Bereifung vorhanden sein. Durch eine Mittelung und Gewichtung fallen über längere Fahrstrecken schlecht meßbare Einflüsse, wie Fahrbahnunebenheiten, Gegenwind, Strekken mit Steigungen oder mit höherer Fahrbahnrauhigkeit, nicht so stark ins Gewicht. Ferner verlieren nicht meßbare Einflußfaktoren, wie beispielsweise die Laufflächentemperatur, an Gewicht. Wichtig ist jedoch die Korrelation zwischen Fahrleistung und auftretendem Schlupf.

Unabdingbar ist es auch, die Steifigkeit des Profils zu kennen. Dies hilft Fehlerfaktoren auszuschließen, die einen Rückschluß auf das Profil verfälschen können. Insofern sollte die Reifenidentifikation auch Informationen über eine harte oder weiche Gummimischung enthalten, das Alter des Reifens und somit einen Anhaltspunkt für die Verhärtung über die Zeit und die Dimension sowie Profilierung des Reifens. Hilfreich wäre femer die Kenntnis über die Anfangssteigung der Reibwert/Schlupfkennlinie auf normierten Belag.

Am besten lassen sich die Fahrbedingungen "Konstantfahrt" und "Beschleunigung geradeaus" auswerten. Die Berücksichtigung von Kurvenfahrten ist wegen verschiedenster Einflüsse auf die Schräglaufsteifigkeit relativ aufwendig. Solange also ausreichend viele Meßwerte bei Geradeausfahrten vorliegen, sollte auf Meßwerte bei Kurvenfahrten verzichtet werden. Auf letztere Meßwerte könnte dann zurückgegriffen werden, wenn über längere Zeit keine auswertbare Geradeausfahrt durchgeführt werden konnte. In einem solchen Fall ist es zweckmäßig, die bei ungünstigen Bedingungen gewonnenen Meßwerte entsprechend zu gewichten, so daß sie nicht mit der gleichen Stärke wie die eine bessere Güte aufweisende Meßdaten in die Mittelung eingehen. Bei einer Mittelung kann allgemein eine Gewichtung bzw. Priorisierung der ermittelten Profildaten vorgenommen werden. Liegen beispielsweise für eine Bereifung Meßdaten für eine längere, ebene Strecke vor, die in Geradeausfahrt durchfahren wurde (z. B. 1 km), und wurde diese Distanz mit hoher Geschwindigkeit durchfahren, so kann davon ausgegangen werden, daß weder Glätte noch sonstige Störfaktoren einen starken Einfluß haben. Der Rückschluß auf das Profil bei einer solchen Messung ist aussagekräftiger als die Auswertung mehrerer Fahrten im Stadtverkehr. Demgemäß kann eine hohe Priorisierung vorgenommen werden. Ähnlich gute Signalqualität besitzt eine Beschleunigungsphase über mindestens zwei Gangstufen ohne Eingriff von Regelsystemen oder eine Verzögerung bei definierter Bremskraftverteilung.

Es ist ferner vorteilhaft, möglichst alle fehlererzeugenden Faktoren zu eliminieren oder zu berücksichtigen. So kann eine Messung bei starkem Gegenwind oder Rückenwind genauso verfälschte Ergebnisse liefern, wie eine lange Bergauf- oder Bergabfahrt, bei der die Schlupfwerte nicht denjenigen Werten entsprechen, die bei Fahrten auf ebenen Gelände erreicht werden.

In einer vorteilhaften Ausführungsform kann eine Plausibilitätsprüfung der gewonnenen Daten erfolgen. Ausgehend von zuverlässigen Messungen kann die Profiltiefe über die Zeit nur abnehmen. Erhöht sich die Profiltiefe ohne erkennbaren Grund, so muß die Richtigkeit der Messung in Frage gestellt werden.

Die Berücksichtigung von Fahrleistungsmessungen läßt einen Rückschluß auf die Fahrzeugmasse zu und reduziert die Fehlermöglichkeiten infolge hoher Radlast. Hohe Radlast führt zu einer vergrößerten Latsch-Fläche und bei gleichen Rahmenbedingungen zu reduziertem Formschlupf. Falls der Reifendruck bekannt ist, kann auch diese Fehlermöglichkeit minimiert werden.

Von großer Bedeutung ist der Radtoleranzabgleich (RTA), bei dem die vorliegenden Unterschiede zwischen den Reifen, beispielsweise LuftdruckUnterschiede, Radien-Unterschiede oder Radlast-Unterschiede ausgeglichen und eine korrigierte Geschwindigkeit der einzelnen Räder angegeben wird. Nur nach einer RTA-Korrektur kann der Schlupf zwischen angetriebenen und frei rollenden Rädern mit der notwendigen Genauigkeit ermittelt werden. Bei den Schlupfwerten handelt es sich dann also um RTA-korrigierte Schlupfwerte.

Die RTA-Werte werden vorzugsweise auch noch hinsichtlich anderer Umgebungseinflüsse, wie Fahrbahnbeschaffenheit, Luftdruck oder Radlast, korrigiert, so daß nach bedarfsweiser Berücksichtigung von Fahrzeug- oder Straßeneinflüssen ein möglichst normierter Schlupfwert für die Auslesung der Profiltiefe aus dem Kennfeld zur Verfügung steht. Ein exakter RTA-Wert, der im Idealfall im ausgekuppelten Zustand gewonnen wird, ist sehr wichtig. Die Ermittelung eines RTA-Wertes ist bei Kenntnis der Fahrdynamik aber auch bei einer geeigneten Querdynamik in Kurven möglich. Die Genauigkeit kann in Kombination mit einem Navigationssystem noch erhöht werden.

Für die Mittelung über eine Vielzahl von Profilwerten werden die einzelnen Profilergebnisse noch gewichtet, insbesondere hinsichtlich deren Aktualität, dem Alter der Reifen sowie der Güte der Messung. Die Güte der Messung kann z. B. je nach Fahrbedingung (Geradeausfahrt, Kurvenfahrt), dem Einsatz von Radschlupfregelsystemen, etc. abhängen. Liegen genügend "gute" Messungen in einem bestimmten Zeitintervall vor, so werden die Meßergebnisse mit schlechterer Güte bei der Mittelung nicht mehr berücksichtigt.

Es können allgemein auch Ausschlußkriterien dafür aufgestellt werden, wann die Profiltiefe nicht ermittelt wird. Bei Kombination mit einer Witterungssensorik sind dies z.B. winterliche Fahrbahnen.

Besonders vorteilhaft ist es auch, bei der Mittelung die Profilwerte aus früheren Fahrten zu berücksichtigen. Zu diesem Zweck können frühere Daten in einem Speicher hinterlegt sein, die bei der Profilbestimmung eingelesen und berücksichtigt werden. Kurzfristige Einflüsse, wie z. B. der Verschleiß der Profilkanten nach einigen forciert gefahrenen Kurven, fallen durch die langfristige Mittelung nicht ins Gewicht.

Bei jedem Reifenwechsel muß der Lernvorgang neu gestartet werden. Falls die Reifenidentifikation eine eindeutige Zuordnung des Reifens erlaubt, können zu erwartende Verschleißzustände im Fahrzeug gespeichert werden. Alternativ kann bei einer Reifenmontage die Profiltiefe gemesen und als Startwert in das System eingegeben werden.

Insgesamt liefert das vorliegende Verfahren eine Information über die Profiltiefe ohne jede Sensorik im Profil. Die Verschleißinformation kann für Systeme wie Reibwerterfassung oder Aquaplaningwarnsysteme verwendet werden. Für Abstandswarnsysteme oder Kollisionsvermeidungssysteme ist die Profilinformation als Grundvoraussetzung für eine Reibwertabschätzung unerläßlich. Zudem kann der Fahrzeugbediener darüber informiert werden, wenn seine Profiltiefe einen bestimmten Grenzwert unterschreitet.

Die Erfindung sowie vorteilhafte Ausführungsformen sind in den Patentansprüchen definiert.

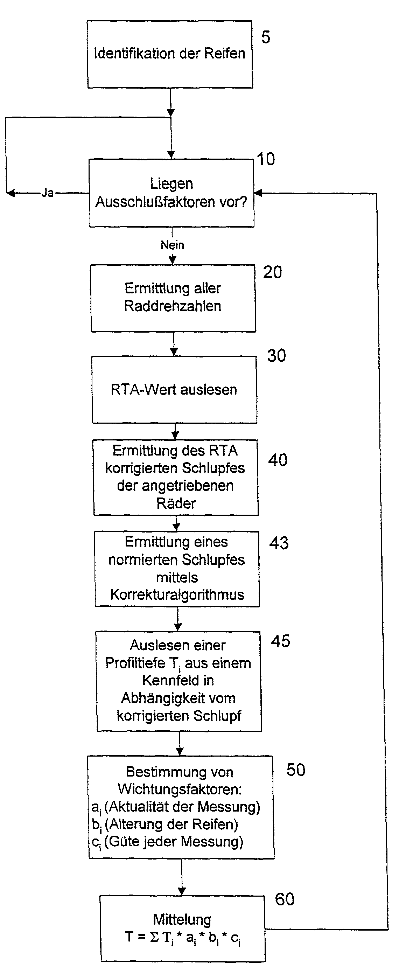

Eine einfache Ausführungsform der vorliegenden Erfindung wird anhand der einzigen Zeichnung näher beschrieben. Diese Zeichnung stellt ein Ablaufdiagramm für ein Verfahren zur Bestimmung der Profiltiefe der an einem Fahrzeug montierten Reifen dar.

In einem ersten Schritt 5 wird zu Beginn einer Fahrt eine Identifikation der an einem Fahrzeug montierten Reifen vorgenommen. Diese Identifikation gibt Aufschluß über den Typ, das Alter und andere Eigenschaften des Reifens.

Im nächsten Schritt 10 wird geprüft, ob ein Ausschlußkriterium vorliegt. Solche Ausschlußkriterien sind vorgegeben und besagen, daß unter bestimmten vorgegebenen Fahrbedingungen eine Profiltiefenermittlung nicht durchgeführt wird. Falls ein solches Ausschlußkriterium vorliegt, wird in einer Schleife zurückverzweigt.

Liegt ein entsprechendes Ausschlußkriterium nicht vor, so werden in einem nächsten Schritt 20 die Raddrehzahlen aller Räder ermittelt. Im Schritt 30 wird der aktuellste RTA-Wert ausgelesen. Der RTA-Wert berücksichtigt Unterschiede der verschiedenen Räder (Unterschied in den Raddurchmessern, Luftdruckunterschiede) und trägt zur Ermittlung eines korrigierten Geschwindigkeitssignals bei. Damit können dann RTA-korrigierten Schlupfwerte beider angetriebenen Räder bestimmt werden (Schritt 40). Um Fehler auszuschließen, werden in einem Korrekturalgorithmus (Schritt 43) vorliegend Größen wie Bergauf- oder Bergabfahrt, Drosselklappenstellung, mit der man entsprechend der gemessenen Geschwindigkeit auf Gegenwind schließen kann, berücksichtigt, so daß ein normierter Schlupfwert erhalten wird. Der RTA-Wert selbst wird in einem nebengeordneten Verfahren bestimmt, und zwar nur in besonders gut geeigneten Situationen. Dazu wird in diesem nebengeordneten Verfahren geprüft, ob eine RTA-Berechnung sinnvoll ist.

Mit dem normierten Schlupfwert kann man aus einem dem jeweiligen Reifen zugeordneten, spezifischen Kennfeld eine zugeordnete Profiltiefe Tᵢ auslesen (Schritt 45).

Die Profiltiefe Tᵢ wird nun in Schritt 50 entsprechend einer bestimmten Fahrsituation mit verschiedenen Parametern gewichtet. Vorliegend werden die Parameter aᵢ, bᵢ und cᵢ verwendet.

Der Parameter aᵢ drückt die Aktualität der jeweiligen Messung aus. Bei einer vor längerer Zeit erfolgten Messung sinkt die Wertigkeit, beispielsweise proportional zu jedem gefahrenen Kilometer. Ferner lassen auch Schlupfregelsituationen, wie der ABS-Einsatz oder der Einsatz eines anderen Schlupfregelsystems, oder Fahrsituationen mit hoher Reifenbeanspruchung die Wertigkeit solcher Messungen sinken.

In den Parameter bᵢ geht die zeitliche Alterung der Reifen ein, die sich über eine zunehmende Steifigkeit auf das Abrollverhalten und damit auf den Schlupf auswirkt.

Der Parameter cᵢ schließlich bestimmt die Güte oder Wertigkeit jeder einzelnen Profiltiefenmessung. Die Güte einer Messung ist beispielsweise bei einer Kurvenfahrt nicht so hoch wie bei einer langen Geradeausfahrt. In den Parameter cᵢ kann auch die abgeschätzte Qualität des RTA-Wertes eingehen.

Entsprechend der obengenannten Vorgehensweise bekommt man eine Anzahl von gewichteten Profilwerten. Im Schritt 60 werden diese über eine bestimmte Anzahl von Profilbestimmungen gemittelt, dies ergibt eine höhere Zuverlässigkeit als Einzelschätzungen.

Hat man damit eine Information der Profiltiefe für die angetriebenen Räder gefunden, so ergibt sich die Abschätzung der Profiltiefe von Reifen an nichtangetriebenen Achsen über die Radienbetrachtung. Dafür ist jedoch ein qualitativ guter RTA-Wert notwendig.

Insgesamt erhält man mit dem oben beschriebenen Verfahren eine einfache und kostengünstige Methode einer groben Profiltiefenabschätzung. Die Profiltiefe kann nach Fahrtende in einem nichtflüchtigen Speicher abgelegt werden und bei einer erneuten Fahrt in die Mittelung miteinfließen.

## Patentansprüche

1. Verfahren zur Bestimmung der Profiltiefe bei einem Fahrzeugreifen während der Fahrt, bei dem
- in einer Initialisierungsphase die an einem Fahrzeug montierten Reifen hinsichtlich ihrer relevanten Daten identifiziert werden,
- ein Reifenformschlupf der angetriebenen Räder bei bestimmten Fahrbedingungen ermittelt und entsprechend der jeweils vorliegenden Fahrbedingungen **durch unterschiedliche Gewichtung** bewertet wird und
- aus dem bewerteten Reifenformschlupf und einem im Fahrzeug gespeicherten Kennfeld entsprechend dem identifizierten Reifen unter Berücksichtigung der verwendeten Gummimischung, des Alters des Reifens, dessen Dimension und Profilierung eine Information über die auf den Reifen vorhandene Profiltiefe ausgegeben wird.

2. Verfahren nach Anspruch 1,
**dadurch gekennzeichnet, dass** eine Mittelung über eine Vielzahl von Profiltiefenausgaben durchgeführt wird.

3. Verfahren nach Anspruch 2,
**dadurch gekennzeichnet, dass** einzelne Profiltiefenausgaben je nach Fahrbedingung und/oder Umwelteinflüssen und/oder zeitlichen Einflüssen gewichtet in die Mittelung aufgenommen werden.

4. Verfahren nach einem der Ansprüche 2 oder 3,
**dadurch gekennzeichnet, dass** aus vorhergehenden Fahrten gespeicherte Profiltiefeninformationen bei der Mittelung berücksichtigt werden.

5. Verfahren nach einem der vorhergehenden Ansprüche,
**dadurch gekennzeichnet, dass** bei vorgegebenen Ausschlusskriterien eine Profiltiefenerfassung nicht vorgenommen wird.

6. Verfahren nach einem der vorhergehenden Ansprüche,
**dadurch gekennzeichnet, dass** die Bestimmung der Profiltiefe im wesentlichen bei Geradeausfahrt erfolgt.

7. Verfahren nach einem der vorhergehenden Ansprüche,
**dadurch gekennzeichnet, dass** ein in **Fahrdynamik-Regelsystemen üblicher** Radtoleranzabgleich durchgeführt wird, um die Unterschiede zwischen den Reifen zu berücksichtigen, und dass als Formschlupfwert zur Ermittlung der Profiltiefe ein entsprechend dem Radtoleranzausgleich korrigierter Schlupfwert verwendet wird.

8. Verfahren nach einem der vorhergehenden Ansprüche,
**dadurch gekennzeichnet, dass** bei der Ermittlung des Formschlupfes äußere Faktoren, wie Gegenwind, Steigungen, Witterung, Straßenbeschaffenheit, berücksichtigt werden.

9. Verfahren nach einem der Ansprüche 2 bis 8,
**dadurch gekennzeichnet, dass** bei der Mittelung der Profiltiefe über eine Vielzahl von Profiltiefen bezüglich jeder einzelnen Profiltiefe die Aktualität der Messung und/oder die Reifenalterung und/oder die Güte der Messung berücksichtigt werden.

10. Verfahren nach einem der vorhergehenden Ansprüche,
**dadurch gekennzeichnet, dass** die gemittelte Profiltiefe einer Plausibilitätsbetrachtung unterzogen wird.

11. Verfahren nach einem der vorhergehenden Ansprüche,
**dadurch gekennzeichnet, dass** die Ermittlung der Profiltiefe an den nicht angetriebenen Rädern über einen aus dem Radtoleranzabgleich stammenden Radienvergleich vorgenommen wird.

12. Verfahren nach einem der vorhergehenden Ansprüche,
**dadurch gekennzeichnet, dass** der Formschlupf bei einer Bremsung mit bekannter Bremskraftverteilung ermittelt wird.

13. Verfahren nach einem der vorhergehenden Ansprüche,
**dadurch gekennzeichnet, dass** die gemittelte Profiltiefe bei Fahrtende im Fahrzeug abgespeichert wird.

14. Verfahren nach einem der vorhergehenden Ansprüche,
**dadurch gekennzeichnet, dass** über eine Witterungssensorik die Witterung zur Detektion einer Ausschlusssituation berücksichtigt wird

15. Verfahren nach einem der vorhergehenden Ansprüche,
**dadurch gekennzeichnet, dass** die die Informationen aus einem Navigationssystem bei der Ermittlung des entsprechend dem Radtoleranzausgleich korrigierten Formschlupfes verwendet wird.

16. Verfahren nach einem der vorhergehenden Ansprüche,
**dadurch gekennzeichnet, dass** eine Anfangsprofiltiefe eines Reifens eingegeben werden kann.

## Claims

1. A method for the determination of tread depth in a vehicle tyre during travel, in which
- in an initialising phase the tyres mounted on a vehicle are identified with respect to their relevant data,
- the tyre form slip of the driven wheels is determined for certain driving conditions and corresponding to the currently existing driving conditions are evaluated using different weightings and
- from the evaluated tyre form slip and a characteristic curve stored in the vehicle corresponding to the identified tyre and taking account of the rubber mixture employed, the age of the tyre, its dimensions and tread form, information on the present tread depth of the tyre is given out.

2. A method according to claim 1, **characterised in that** an averaging covering a multiplicity of tread depth outputs is performed.

3. A method according to claim 2, **characterised in that** individual tread depth outputs are accepted into the averaging weighted in each case according to driving conditions and/or environmental influences and/or time influences.

4. A method according one of the claims 2 or 3, **characterised in that** tread depth data stored from previous journeys are taken into consideration in the averaging.

5. A method according to any of the previous claims, **characterised in that** with pre-given exclusion criteria the tread depth calculation is not undertaken.

6. A method according to one of the foregoing claims, **characterised in that** the determination of the tread depth is essentially carried out in straight travel.

7. A method according to one of the foregoing claims, **characterised in that** the customary wheel tolerance equalisation is carried out in the driving dynamics regulation system, in order to take into account the differences between the tyres, and that a slip value corrected in accordance with the wheel tolerance equalisation is used to determine the tread depth.

8. A method according to one of the foregoing claims, **characterised in that** in the determination of the form slip outside factors such as contrary winds, hills, weather, road quality, are taken into consideration.

9. A method according to one of the claims 2 to 8, **characterised in that** in the averaging of the tread depths over a multiplicity of tread depths, the time of the measurement and/or the aging of the tyre and/or the quality of the measurement are taken into account with respect to each individual tread depth.

10. A method according to one of the foregoing claims, **characterised in that** the averaged tyre tread depth is subjected to a plausibility observation.

11. A method according to one of the foregoing claims, **characterised in that** the calculation of the tread depth on the non-driven wheels is undertaken using a tyre comparison stemming from the wheel tolerance equalisation.

12. A method according to one of the foregoing claims, **characterised in that** the form slip is calculated using a breaking with known break force distribution.

13. A method according to one of the foregoing claims, **characterised in that** the tread depth determined is stored in the vehicle at the end of the journey.

14. A method according to one of the previous claims, **characterised in that** the weather is taken into account for the detection of an exclusion situation using a weather sensor.

15. A method according to one of the previous claims, **characterised in that** the information from a navigation system is used in the determination of the form slip corrected in accordance with the wheel tolerance equalisation.

16. A method according to one of the previous claims, **characterised in that** a starting depth of tread of a tyre can be input at the beginning.

## Revendications

1. Procédé pour déterminer la profondeur du profil d'un pneumatique de véhicule pendant le déplacement, selon lequel
- au cours d'une phase d'initialisation on identifie les données caractéristiques des pneumatiques montés sur le véhicule,
- on détermine un patinage de forme de pneumatique des roues motrices dans certaines conditions de roulage et suivant les conditions de déplacement présentes on l'exploite par une pondération différente, et
- à partir du patinage de forme de pneumatique, exploité et d'un champ de caractéristiques mis en mémoire dans le véhicule en fonction des pneumatiques identifiés et en tenant compte du mélange de caoutchouc utilisé, de l'âge du pneumatique, de ses dimensions et de son profil, on émet une information concernant la profondeur du profil des pneumatiques.

2. Procédé selon la revendication 1
**caractérisé en ce qu'**
on forme une moyenne sur un grand nombre d'émissions de profondeur de profil.

3. Procédé selon la revendication 2
**caractérisé en ce que**
pour former la moyenne les différentes émissions de profondeur de profil sont pondérées suivant les conditions de roulage et/ou les influences de l'environnement et/ou les influences dans le temps.

4. Procédé selon l'une des revendications 2 ou 3
**caractérisé en ce qu'**
on tient compte des informations de profondeur de profil enregistrées à partir des déplacements précédents pour former la moyenne.

5. Procédé selon l'une des revendications précédentes
**caractérisé en ce qu'**
on n'effectue pas de saisies de profondeur de profil pour des critères d'exclusion prédéterminés.

6. Procédé selon l'une des revendications précédentes
**caractérisé en ce qu'**
on détermine la profondeur du profil essentiellement pour un déplacement en ligne droite.

7. Procédé selon l'une des revendications précédentes
**caractérisé en ce qu'**
on effectue une compensation de tolérance de roues habituelle dans les systèmes de régulation dynamique de roulement pour tenir compte des différences entre les pneumatiques, et on utilise comme valeur de patinage de forme pour déterminer la profondeur du profil, une valeur de patinage corrigée en fonction de la compensation correspondante de la tolérance de roue.

8. Procédé selon l'une des revendications précédentes
**caractérisé en ce qu'**
en déterminant le patinage de forme on tient compte de facteurs extérieurs comme par exemple le vent de face, la pente, les intempéries, les caractéristiques de la chaussée.

9. Procédé selon les revendications 2 à 8
**caractérisé en ce qu'**
en formant la moyenne des profondeurs de profil sur un grand nombre de profondeurs de profil, pour chaque profondeur de profil séparé on tient compte de l'actualité de la mesure et/ou du vieillissement du pneumatique et/ou de la qualité de la mesure.

10. Procédé selon l'une des revendications précédentes
**caractérisé en ce qu'**
on soumet la profondeur de profil moyenne à une vérification de plausibilité.

11. Procédé selon l'une quelconque des revendications précédentes
**caractérisé en ce qu'**
on détermine la profondeur de profil des roues non motrices par une comparaison des rayons provenant d'une compensation de tolérance de roue.

12. Procédé selon l'une quelconque des revendications précédentes
**caractérisé en ce qu'**
on détermine le patinage de formes lors d'un freinage avec une répartition de force de freinage connue.

13. Procédé selon l'une quelconque des revendications précédentes
**caractérisé en ce qu'**
on enregistre la profondeur de profil moyenne d'un véhicule, à la fin du déplacement.

14. Procédé selon l'une quelconque des revendications précédentes
caractérisé en qu'
on tient compte des intempéries pour la détection d'une situation d'exclusion, par l'intermédiaire de capteurs d'intempéries.

15. Procédé selon l'une quelconque des revendications précédentes
**caractérisé en ce qu'**
on utilise les informations d'un système de navigation pour déterminer le patinage de formes corrigé en fonction de la compensation de tolérance de roue.

16. Procédé selon l'une des revendications précédentes
**caractérisé en ce qu'**
on introduit la profondeur initiale du profil d'un pneumatique.
